# FASCICULE DE BREVET EUROPEEN

(11) **EP 1 607 271 B1**
(45) Date de publication et mention de la délivrance du brevet: **03.01.2007**
(21) Numéro de dépôt: 05291283.9
(22) Date de dépôt: 15.06.2005
(51) Int. Cl.: B60R 16/02

(54) **Dispositif de traversée de tôle mince**
Durchführungsvorrichtung für dünnes Blech
Lead -through device for a thin metal sheet

(30) Priorité: 15.06.2004 FR 0451176
(43) Date de publication de la demande: 21.12.2005
(73) Titulaire: CF Gomma Spa, 25050 Passirano (Brescia) (IT)
(72) Inventeur: Bloret, Jean-Pierre, 35700 Rennes (FR); Barbe, Laurent, 35000 Rennes (FR)
(74) Mandataire: Breese Derambure Majerowicz

(56) Documents cités:
- DE-A- 10 129 086
- DE-A- 10 140 714
- DE-A- 19 904 549
- US-B1- 6 660 937

## Description

La présente invention se rapporte au domaine des joints d'étanchéité aux fluides et d'étanchéité acoustique. La présente invention se rapporte plus particulièrement aux joints, disposant d'au moins un orifice pour le passage d'un câble ou analogue, à insérer au niveau d'une tôle mince dont l'ajour conditionne la forme du dispositif, généralement dans un véhicule motorisé. Elle concerne notamment les parties d'un véhicule devant respecter des conditions d'étanchéité particulièrement sévères, par exemple au niveau des passages de roues.

Le besoin croissant en matière d'équipement d'alimentation électrique, par exemple pour le maintien sous tension d'éléments informatiques, nécessite d'implanter dans ceux-ci des batteries supplémentaires d'accumulateurs. Ces batteries supplémentaires sont implantées, par exemple, sous les sièges avant ou dans le coffre. Cela crée l'obligation de traverser des parois de tôle par des câbles rigides ou semi-rigides pour assurer les connexions.

Ainsi, ce nouveau types de véhicule engendre des risques de passages de bruit, d'eau, de gaz....

Par ailleurs, la rigidité des tôles minces est généralement insuffisante, notamment au regard de la rigidité des câbles qui doivent les traverser.

À l'heure actuelle, il n'existe pas sur le marché de joints de traversée de tôles minces multicâbles permettant de garantir une étanchéité totale ou quasi-totale, en particulier tant sur le plan acoustique qu'au niveau des fluides.

La présente invention entend remédier aux inconvénients de l'art antérieur en proposant un joint de conception nouvelle décrit dans la suite.

Pour ce faire, la présente invention concerne un dispositif de traversée d'une tôle mince soumise à des conditions d'étanchéité particulièrement sévères autorisant le passage d'au moins un câble, notamment dans un véhicule automobile, comprenant un joint, en élastomère ou élastomère thermoplastique, comportant au moins un orifice de passage pour câble, caractérisé en ce qu'il comprend un insert de rigidification en matériau thermoplastique associé à un moyen de serrage.

L'élastomère ou élastomère thermoplastique a une dureté qui est par exemple de 60 à 70. Il est par exemple surmoulé sur l'insert de rigidification.

Dans un mode de réalisation, l'insert de rigidification comprend au moins une vis de serrage coopérant avec un boulon intervenant de l'autre côté de ladite tôle.

Avantageusement, ledit dispositif est associé à une contre-plaque.

Avantageusement, la contre-plaque comprendra un évidemment latéral permettant le chaussage sur le passage des câbles.

Cette contre plaque pourra être en métal ou en thermoplastique.

Avantageusement, l'insert de rigidification est moulé, surmoulé ou assemblé mécaniquement sur la ou les vis de fixation, et le joint est fabriqué par injection d'élastomère ou d'élastomère thermoplastique sur l'insert.

Dans un autre mode de réalisation, le dispositif est associé à une pièce intérieure comprenant au moins une vis de serrage coopérant avec un boulon extérieur.

Avantageusement, la pièce intérieure est moulée, surmoulée ou assemblée mécaniquement sur la ou les vis de fixation.

Avantageusement, le dispositif comprend deux vis de serrage situées à ses deux extrémités.

Avantageusement, la ou les vis de serrage comprendra/comprendront à l'extrémité supérieure une portion d'engagement destiné à faciliter l'engagement dans un moyen de fixation de ladite ou desdites vis d'assemblage.

Avantageusement, l'insert de rigidification pourra comprendre une pluralité de plots et de collerettes protubérants ayant pour fonction de limiter positivement le serrage.

Selon une possibilité offerte par l'invention, l'orifice de passage du joint comprendra au moins une lèvre circulaire intérieure.

Cette lèvre est adaptée à serrer le câble de sorte qu'une double chambre est créée dans le passage, de part et d'autre de la lèvre. Cet effet de double paroi acoustique permet d'assurer l'étanchéité acoustique optimum.

Avantageusement, l'orifice de passage présentera des extrémités rétrécies.

Selon une possibilité offerte par l'invention, le dispositif de l'invention peut comprendre au moins un collier de serrage ou un enrubannage qui vient se fixer sur l'une des extrémités de l'orifice de passage.

Alternativement, un enrubannage liera le câble et le joint.

Avantageusement, le dispositif pourra comprendre au moins une lèvre d'étanchéité venant en contact avec la tôle.

Grâce au dispositif de l'invention, on obtient les avantages suivants :
- atténuation de la transparence acoustique par le principe dit de la double paroi,
- rigidification de la tôle au niveau du passage des câbles,
- facilité de montage aussi bien sur le câble que sur le véhicule,
- faible prix de revient.

On comprendra mieux l'invention à l'aide de la description, faite ci-après à titre purement explicatif, de deux modes de réalisation de l'invention, en référence aux figures annexées :
- la figure 1 illustre une vue en perspective du dispositif selon un premier mode de réalisation de l'invention ;
- la figure 2 illustre une vue en perspective d'un insert de rigidification du dispositif de la figure 1;
- la figure 3 illustre une vue en perspective d'une plaque de renfort et de deux boulons destinés à venir fixer l'ensemble des éléments du dispositif de la figure 1 ;
- la figure 4 illustre une vue en coupe du dispositif de la figure 1 ;
- la figure 5 illustre une vue en perspective du dispositif selon un deuxième mode de réalisation de l'invention ;
- la figure 6 illustre une vue en perspective d'un insert de rigidification du dispositif de la figure 5;
- la figure 7 illustre une vue en perspective d'une pièce intérieure du dispositif de la figure 5; et
- la figure 8 illustre une vue en coupe du dispositif selon l'invention.

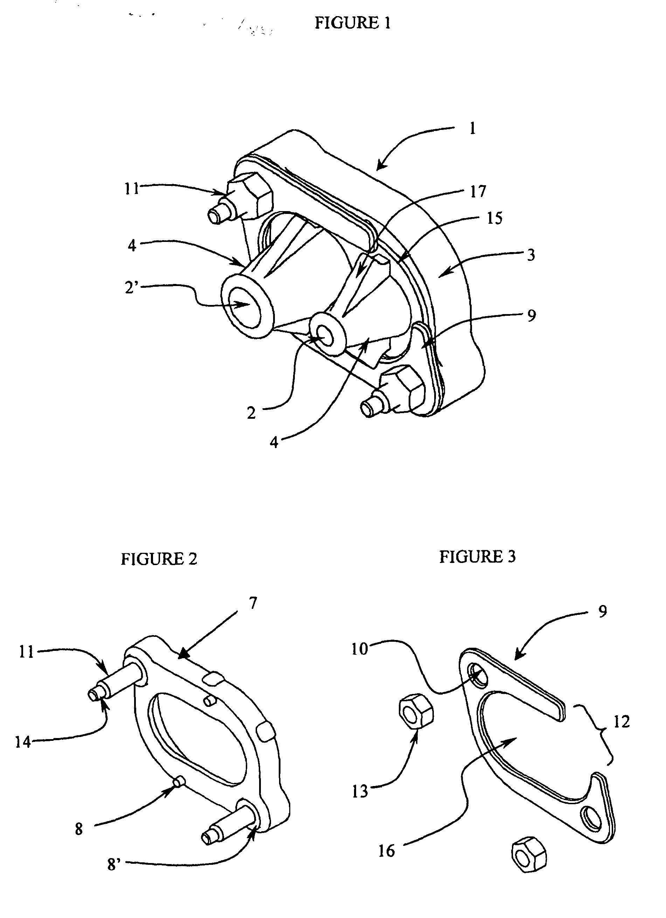

Un dispositif 1 selon une première variante de l'invention, illustrée sur les figures 1 à 4, consiste en un ensemble d'éléments solidement fixés les uns aux autres, pour assurer d'une part l'étanchéité du dispositif 1 et d'autre part assurer le passage de câbles, non représentés sur les figures annexées. Dans l'exemple choisi pour illustrer l'invention, le dispositif 1 comprend deux orifices 2, 2' de diamètres différents.

Les deux orifices 2, 2' présents dans, ou sur, le joint 3 en matière élastomère ou élastomère thermoplastique ont chacun, sur au moins un des côtés, une partie protubérante 4 ayant une forme de cône tronqué, de sorte que leur diamètre diminue depuis le centre vers l'extrémité libre. Sur la figure 4, on notera que les parties protubérantes 4 des deux orifices 2, 2' ne présentent pas les mêmes formes et les mêmes longueurs ou dimensions d'un côté et de l'autre par rapport au plan médian XX' formé par la tôle 5 mince de séparation. Néanmoins, il pourra être prévu que les dimensions et géométries des protubérances 4 de chaque côté du plan médian XX' soient identiques.

Pour créer le principe d'étanchéité acoustique dit de la double paroi, chaque orifice de passage 2, 2' du joint 3 comprend une lèvre périphérique 6 flexible circulaire destinée à venir en contact avec le câble, ou analogue, pour garantir l'étanchéité au niveau de l'orifice de passage 2 ou 2'. Bien entendu, on pourra prévoir de disposer une pluralité de lèvres 6 ou autres éléments venant en contact flexible avec le câble de manière à épouser au mieux la forme de ce dernier. Par ailleurs, cette lèvre 6 sera idéalement en un matériau élastomère qui présente de fortes propriétés assurant le serrage sur la garniture d'isolation du câble.

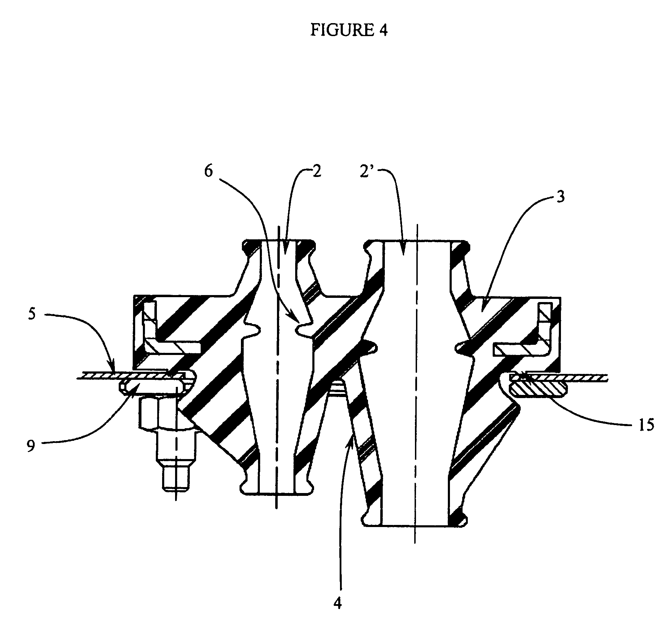

L'insert de rigidification 7 en matériau thermoplastique (par exemple en polyamide 66 ou en polypropylène) chargé, représenté sur la figure 2, comporte dans l'exemple choisi pour illustrer l'invention deux plots 8 circulaires s'étendant sensiblement perpendiculairement au plan d'extension de l'insert 7 et deux collerettes 8' s'étendant au niveau de l'embase des vis 11, à la même hauteur. Ces plots 8 et collerettes 8', rigides, sont destinés à venir au contact de la tôle 5 lors de l'assemblage sur véhicule, limitant la compression de la lèvre d'étanchéité 15 et permettant un serrage au couple des écrous avec appui de réaction non déformable. Bien entendu, on pourra prévoir plus de plots 8 à condition de disposer ces plots 8 symétriquement sur les bords de l'insert de rigidification 7, c'est-à-dire deux à deux sur des bords opposés.

La contre-plaque de serrage 9 comprend deux trous 10 ou orifices situés à deux extrémités opposés et destinés à laisser introduire les vis d'assemblage 11 de l'insert de rigidification 7. La contre-plaque 9, en métal ou en thermoplastique rigide, se présente sous la forme d'un cercle s'inscrivant dans un rectangle avec une ouverture ou évidemment 12 dans ou à l'une de ses quatre extrémités.

Sur la figure 3, il est également représenté les deux écrous 13 qui viennent se fixer respectivement sur chacune des deux vis d'assemblage 11 pour maintenir fixe et solidaire l'ensemble des éléments 3, 7, 9 constituant le dispositif 1 de l'invention.

L'insert de rigidification 7 est constitué d'un corps en thermoplastique voire en aluminium intégrant solidairement au moins une vis (ou écrou) d'assemblage 11 afin d'assurer le blocage en rotation et axialement. Dans notre exemple, il y a deux vis 11 mais on pourra avoir un système type verrou et une seule vis. Cette vis 11 peut être clipée, c'est-à-dire fixée et rapportée sur l'insert de rigidification 7, ou surmoulée par le thermoplastique de l'insert 7. Pour faciliter le montage sur véhicule, la vis 11 est munie d'un bout ou extrémité pilote ou d'engagement 14. Les plots 8 et les collerettes 8' en saillies assurent un positionnement dans l'outil de surmoulage ainsi que la reprise mécanique du couple de serrage lors du montage final.

Le joint 3 est réalisé par surmoulage d'un élastomère ou d'un Thermoplastique élastomère (TPE) sur l'insert de rigidification 7. L'élastomère 3 est solidaire de l'insert 7 par enrobage, sans adhérisation. Ce joint 3 comporte au moins un trou ou orifice de passage 2 ou 2' de câble, le nombre d'orifice dépendant du besoin. Le passage 2 ou 2' est de forme resserrée à au moins une extrémité pour assurer l'étanchéité. Bien entendu, comme illustré sur la figure 4, il sera possible de resserrer également l'autre extrémité et de prévoir, pour parfaire l'étanchéité acoustique, une lèvre circulaire intérieure 6 créant l'effet de double paroi acoustique. Pour assurer le bon fonctionnement du dispositif 1 de l'invention, les extrémités assurent un serrage compatible avec la mise en place du câble. Pour parfaire le serrage on pourra utiliser un collier, ou analogue tel que ruban adhésif, non représenté sur les figures annexées.

Au moins une lèvre 15 en saillie et continue de raideur faible est disposée sur la face d'appui du joint 3. Cette lèvre assure l'étanchéité sur la tôle 5 et est disposée éventuellement également sur l'insert 7, sur la tôle 5 et extérieurement à l'ajour de tôle 5 nécessaire au passage du câble.

Un système de retenu en saillie 17 comprend des nervures ménagées sur la surface extérieure des protubérances 4. Ces nervures de formes triangulaires de sorte qu'elles définissent, d'une part, une rampe et, d'autre part, un épaulement. Lorsque le dispositif 1 est introduit à travers la tôle, l'action des bords de la tôle sur la rampe provoque la déformation de la nervure jusqu'à ce que la tôle se trouve au niveau de l'épaulement, la nervure se détendant alors élastiquement, de sorte que la tôle est pincée entre, d'un côté, l'épaulement et, de l'autre côté, le corps du joint. Ce système de retenue en saillie maintient l'ensemble du joint 3 en position dans la tôle 5 en attente de la mise en place de la contre-plaque 9 et du serrage des écrous 13.

La contre-plaque 9, ou plaque de renfort, en métal voir en thermoplastique, est nécessaire si la tôle 5 est de faible épaisseur et donc déformable, ou de forme particulière. La plaque 9 assure après serrage des écrous 13 le placage linéaire de la lèvre 15 sur la tôle 5, assurant ainsi une étanchéité parfaite. Des rondelles en remplacement de la contre-plaque 9 peuvent être envisagées dans le cas de tôle rigide. La contre-plaque 9 peut posséder un passage sectoriel ou évidemment central 16 permettant la mise en place de la contre-plaque 9 dans la zone du joint 3 lors de l'assemblage évitant ainsi l'enfilage par l'extrémité du câble jusqu'au joint 3.

La fabrication des différents éléments du dispositif s'effectue de la manière suivante :
1. Réalisation de l'insert 7 par moulage injection (Thermoplastique ou aluminium) ou par extrusion dans le cas de l'aluminium ;
2. Mise place des vis d'assemblage 11 ou écrou par clipage, sertissage ou autre technique.
   Alternativement, les vis 11 sont intégrées lors du moulage. Dans ce cas, l'insert de rigidification 7 est moulé ou surmoulé sur la ou les vis de fixation 11.
3. Surmoulage d'un élastomère ou d'un TPE sur l'insert de rigidification 7.

La mise en place des différents éléments du dispositif 1 selon l'invention s'effectue en suivant les étapes chronologiques suivantes :
1. Montage en position sur le câble ;
2. Présentation de l'ensemble dans l'ajour de passage ;
3. Enclipsage des nervures 17;
4. Mise place de la contre-plaque 9 ou des rondelles ;
5. Serrage des écrous 13.

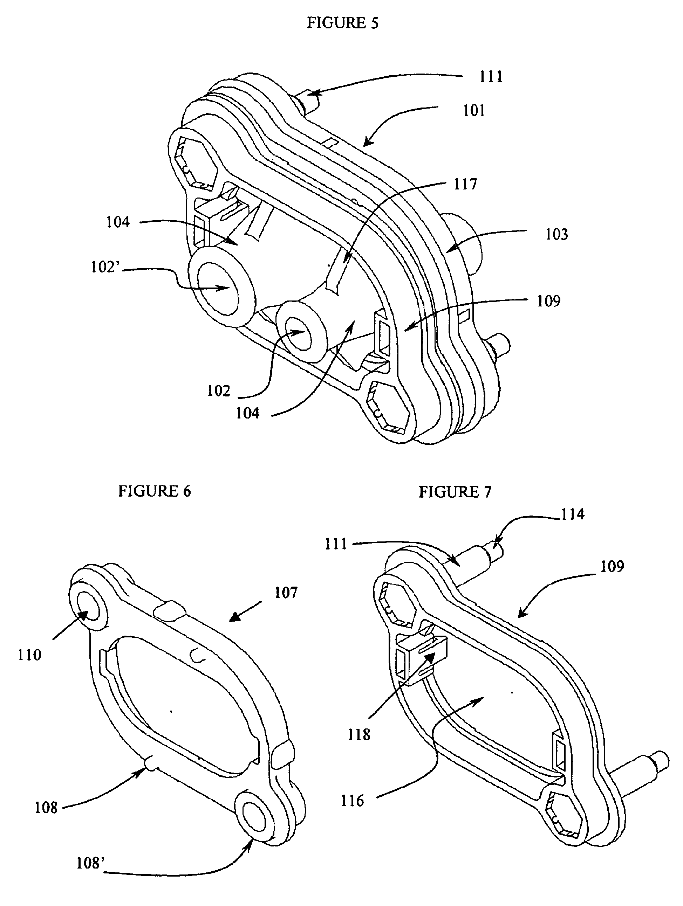

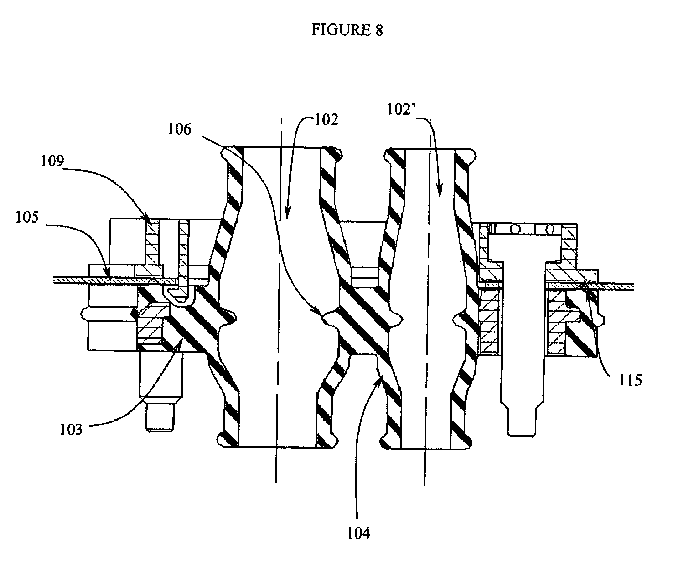

Un dispositif 101 selon une deuxième variante de l'invention, illustrée sur les figures 5 à 8, consiste également en un ensemble d'éléments solidement fixés les uns aux autres, pour assurer d'une part l'étanchéité du dispositif 101 et d'autre part assurer le passage de câbles, non représentés sur les figures annexées.

Cette variante est prévue notamment pour obtenir un serrage du dispositif à l'extérieur de la caisse. Dans le mode de réalisation précédent, le sens de montage est réalisé de l'extérieur du véhicule vers la caisse avec serrage à l'intérieur de la caisse. L'objectif ici est un sens de montage réalisé de l'intérieur de la caisse vers l'extérieur du véhicule avec serrage à l'extérieur de la caisse.

Globalement, ce dispositif 101 comprend, comme dans le mode de réalisation précédent, un insert de rigidification 107 sur lequel est surmoulé un corps en élastomère formant joint 103. A la différence du mode de réalisation précédent, l'insert de rigidification ne comprend pas à ses extrémités de vis de serrage mais deux logements cylindriques 110 adaptés à être traversés par des vis de serrage portées par une pièce intérieure 109.

Le joint 103 est globalement semblable au joint 3 décrit précédemment avec deux orifices 102 et 102' traversant des parties protubérantes 104 en formes de cônes tronqués disposés base contre base, la longueur des parties protubérantes de chaque côté du joint étant différentes : les protubérances extérieures étant plus courtes que les protubérances intérieures.

Le joint 103 est réalisé par surmoulage d'un élastomère ou d'un Thermoplastique élastomère (TPE) sur l'insert de rigidification 107. Le joint 103 est solidaire de l'insert 107 par enrobage sans adhérisation dans le cas d'un insert en TP polyamide. Le joint 103 est solidaire de l'insert 107 par liaison physico-chimique dans le cas d'un surmoulage TPE sur un insert TP Polypropylène .

Pour parfaire le serrage on pourra utiliser, au niveau des extrémités des orifices 102 et 102' un collier de serrage ou un enrubannage liant les câbles et le joint, non représentés sur les figures annexées.

Au moins une lèvre 115 en saillie et continue de raideur faible est disposée sur la face d'appui du joint 103. Cette lèvre assure l'étanchéité sur la tôle 105.

Des nervures 117 identiques aux nervures 17 du mode de réalisation précédent sont ménagées sur les parois des protubérances tronconiques 104 du côté intérieur du joint. Elles ne servent pas dans ce mode de réalisation de système de retenue avant vissage mais servent de moyen d'autocentrage du dispositif 101.

Pour créer le principe d'étanchéité acoustique dit de la double paroi, chaque orifice de passage comprend une lèvre périphérique 106 flexible circulaire destinée à venir en contact avec le câble, ou analogue, pour garantir l'étanchéité.

L'insert de rigidification 107 en matériau thermoplastique, par exemple en polyamide 66 chargé de fibre de verre, représenté sur la figure 6, est semblable à l'insert 7 décrit précédemment à l'exception des vis de serrage à la position desquelles se trouvent des logements cylindriques 110. Comme dans le mode de réalisation précédent deux plots 108 et deux collerettes 108' sont destinés à venir au contact de la tôle 105 lors de l'assemblage sur véhicule, limitant la compression de la lèvre d'étanchéité 115 et permettant un serrage au couple des écrous avec appui de réaction non déformable. Là encore, on pourra prévoir plus de plots 108 à condition de disposer ces plots 108 symétriquement sur les bords de l'insert de rigidification 107, c'est-à-dire deux à deux sur des bords opposés.

La pièce intérieure 109 comprend deux vis de serrage 111 situées à ses extrémités et destinées à s'introduire dans les orifices 110 de l'insert de rigidification 107. Elle est avantageusement réalisée en thermoplastique par surmoulage sur les vis 111, métalliques. Alternativement, les vis 111 peuvent être clipées, c'est-à-dire fixées et rapportées sur la pièce intérieure 109. Pour faciliter le montage sur véhicule, chacune des vis 111 est munie d'un bout ou extrémité pilote ou d'engagement 114.

Les écrous de serrage, non représentés, interviennent contre l'insert 107, au niveau de deux collerettes situées dans le prolongement des collerettes 108', du côté extérieur du dispositif.

La pièce intérieure 109 comporte des clips 118 (deux dans l'exemple décrit). Ces clips sont adaptés à venir s'enclipser sur la tôle 105 de manière à maintenir la pièce 109 contre la tôle.

La fabrication des différents éléments du dispositif s'effectue de la manière suivante :
1. Réalisation de l'insert 107 par moulage injection ;
2. Surmoulage d'un élastomère ou d'un TPE sur l'insert de rigidification 107.
3. Réalisation de la pièce intérieure 109 par moulage injection. Mise place des vis d'assemblage 111 par clipage, sertissage ou autre technique. Alternativement, les vis 111 sont intégrées lors du moulage. Dans ce cas, la pièce 109 est moulée ou surmoulée sur les vis de fixation 111.

La mise en place des différents éléments du dispositif 101 selon l'invention s'effectue en suivant les étapes chronologiques suivantes :
1. Mise en place de la pièce extérieure 109 contre l'ajour de passage et clipage sur la tôle au moyen des clips 118.
2. Montage du dispositif 101, les logements cylindriques accueillant les vis 111 guidées par leurs extrémités 114, les rainures 117 assurant le centrage de l'ensemble.
3. Serrage des écrous.

L'invention est décrite dans ce qui précède à titre d'exemple. Il est entendu que l'homme du métier est à même de réaliser différentes variantes de l'invention sans pour autant sortir du cadre du brevet.

## Revendications

1. Dispositif (1 ; 101) de traversée de tôle (5 ; 105) mince autorisant le passage d'au moins un câble, notamment dans un véhicule automobile, comprenant un joint (3 ; 103), en élastomère ou élastomère thermoplastique, comportant au moins un orifice de passage (2, 2' ; 102, 102')) pour câble, **caractérisé en ce qu**'il comprend un insert de rigidification (7 ; 107) en matériau thermoplastique associé à un moyen de serrage mécanique (11, 13 ; 111).

2. Dispositif (1) selon la revendication 1, **caractérisé en ce que** l'insert de rigidification (7) comprend au moins une vis de serrage (11) coopérant avec un boulon (13) intervenant de l'autre côté de ladite tôle.

3. Dispositif (1) selon la revendication 2, **caractérisé en ce que** ledit dispositif est associé à une contre-plaque (9).

4. Dispositif (101) selon la revendication 1, **caractérisé en ce qu**'il est associé à une pièce intérieure (109) comprenant au moins une vis de serrage (111) coopérant avec un boulon extérieur.

5. Dispositif (1) selon l'une quelconque des revendications précédentes, **caractérisé en ce qu**'il comprend deux vis de serrage (11 ; 111) situées à ses deux extrémités.

6. Dispositif (1 ; 101) selon l'une quelconque des revendications 2 à 5, **caractérisé en ce que** chaque vis d'assemblage (11 ;111) comprend à son extrémité supérieure une portion d'engagement (14 ;114) destinée à faciliter l'engagement dans un logement correspondant (10 ; 110).

7. Dispositif (1 ;101) selon l'une quelconque des revendications précédentes, **caractérisé en ce que** l'insert de rigidification (7 ;107) comprend une pluralité de moyens protubérants (8, 8' ;108,108').

8. Dispositif (1 ;101) selon l'une quelconque des revendications précédentes, **caractérisé en ce que** l'orifice de passage (2 ou 2' ; 102, 102') du joint (3 ;103) comprend au moins une lèvre circulaire intérieure (6 ;106).

9. Dispositif (1 ;101) selon l'une quelconque des revendications précédentes, **caractérisé en ce que** l'orifice de passage (2 ou 2' ;102,102') présente des extrémités rétrécies.

10. Dispositif (1 ;101) selon la revendication 9, **caractérisé en ce qu**'il comprend au moins un collier de serrage qui vient se fixer sur l'une des extrémités de l'orifice de passage (2 ou 2' ;102,102').

11. Dispositif (1 ;101) selon la revendication 9, **caractérisé en ce qu'**il comprend au moins un enrubannage liant le câble et le joint.

12. Dispositif (1 ;101) selon l'une quelconque des revendications précédentes, **caractérisé en ce qu'**il comprend au moins une lèvre d'étanchéité (15 ;115) venant en contact avec la tôle (5 ;105).

13. Dispositif (1) selon l'une quelconque des revendications précédentes, **caractérisé en ce qu**'une contre-plaque (9) comprend un évidemment latéral (12) permettant le chaussage sur le passage des câbles.

14. Dispositif (1 ;101) selon l'une quelconque des revendications précédentes, **caractérisé en ce que** l'insert de rigidification (7) ou la pièce intérieure (109) est moulé, surmoulé ou assemblé mécaniquement sur la ou les vis de fixation (11 ;111), et le joint (3 ;103) est fabriqué par injection d'élastomère ou d'élastomère thermoplastique sur l'insert (7 ;107).

## Claims

1. A device (1, 101) to allow the passage through a thin sheet (5, 105) of at least one cable, in particular in an automotive vehicle, comprising a joint (3, 103) made from an elastomer, or a thermoplastic elastomer comprising at least one cable passage opening (2, 2', 102, 102'), **characterised by** the fact that it comprises a stiffening insert (7, 107) made of a thermoplastic material and linked to a means of mechanical locking (11, 13, 111)

2. A device (1) according to claim 1, **characterised by** the fact that the stiffening insert (7) comprises at least one locking screw (11) working in concert with a bolt (13) acting from the opposite side of the said sheet.

3. A device (1) according to claim 2, **characterised by** the fact that the said device is connected with a back plate (9).

4. A device (101) according to claim 1, **characterised by** the fact that it is connected with an interior part (109) comprising at least one locking screw (111) acting in concert with an exterior bolt.

5. A device (1) according to any of the foregoing claims, **characterised by** the fact that it comprises two locking screws (11, 111) located at its two ends.

6. A device (1, 101) according to one of the claims from 2 to 5, **characterised by** the fact that each means of assembly (11, 111) comprises at its upper end a section (14, 114 which is able to facilitate its engagement in a corresponding opening (10, 110).

7. A device (1, 101) according to any of the foregoing claims, **characterised by** the fact that the stiffening insert (7, 107) comprises a plurality of protrusions (8, 8', 108, 108').

8. A device (1, 101) according to any one of the foregoing claims, **characterised by** the fact that the passage opening (2 or 2', 102, 102') of the joint (3, 103) comprises at least one interior circular lip (6, 106)

9. A device (1, 101) according to any one of the foregoing claims, **characterised by** the fact that the passage opening (2 or 2', 102, 102') has recessed ends.

10. A device (1, 101) according to claim 9, **characterised by** the fact that it comprises at least one locking collar, which is fixed to one of the ends of the passage opening (2 or 2', 102, 102').

11. A device (1, 101) according to claim 9, **characterised by** the fact that it comprises at least one tape linking the cable and the joint.

12. A device (1, 101) according to any one of the foregoing claims, **characterised by** the fact that it comprises at least one sealing lip (15,115) in contact with the sheet (5,105)

13. A device (1) according to any one of the foregoing claims, **characterised by** the fact that a back plate (9) comprises a lateral cutout (12), which makes it possible to insert the cable into the cable passage opening.

14. A device (1,101) according to any one of the foregoing claims, **characterised by** the fact that the stiffening insert (7) or the interior part (109) is moulded, moulded on, or mechanically assembled on the fixing screw or screws (11, 111) and the joint (3, 103) is manufactured by the injection moulding of the elastomer or thermoplastic elastomer onto the insert (7, 107)

## Patentansprüche

1. Vorrichtung (1; 101) zur Durchführung eines dünnen Blechs (5; 105), welche die Durchführung von mindestens einem Kabel ermöglicht, insbesondere in einem Kraftfahrzeug, die eine Dichtung (3; 103) aus Elastomer oder thermoplastischem Elastomer umfasst, die mindestens ein Durchführungsloch (2, 2'; 102, 102') für Kabel umfasst, **dadurch gekennzeichnet, dass** es eine Versteifungseinlage (7; 107) aus thermoplastischem Material umfasst, die mit einem mechanischen Klemmmittel (11, 13; 111) verbunden ist.

2. Vorrichtung (1) gemäß Anspruch 1, **dadurch gekennzeichnet, dass** die Versteifungseinlage (7) mindestens eine Spannschraube (11) umfasst, die mit einem Bolzen (13) zusammenarbeitet, der auf der andere Seite des besagten Blechs eingreift.

3. Vorrichtung (1) gemäß Anspruch 2, **dadurch gekennzeichnet, dass** die besagte Vorrichtung mit einer Gegenplatte (9) verbunden ist.

4. Vorrichtung (101) gemäß Anspruch 1, **dadurch gekennzeichnet, dass** sie mit einem Innenteil (109) verbunden ist, das mindestens eine Spannschraube (111) umfasst, die mit einem Außenbolzen zusammenwirkt.

5. Vorrichtung (1) gemäß einem der vorherigen Ansprüche, **dadurch gekennzeichnet, dass** sie zwei Spannschrauben (11; 111) umfasst, die sich an ihren beiden Enden befinden.

6. Vorrichtung (1; 101) gemäß einem der Ansprüche 2 bis 5, **dadurch gekennzeichnet, dass** jede Maschinenschraube (11; 111) an ihrem oberen Ende einen Eingriffteil (14; 114) umfasst, das dazu dient, das Eingreifen in einer entsprechenden Aufnahme (10; 110) zu erleichtern.

7. Vorrichtung (1; 101) gemäß einem der vorherigen Ansprüche, **dadurch gekennzeichnet, dass** die Versteifungseinlage (7; 107) mehrere hervorstehende Mittel (8, 8'; 108, 108') umfasst.

8. Vorrichtung (1; 101) gemäß einem der vorherigen Ansprüche, **dadurch gekennzeichnet, dass** das Durchführungsloch (2 oder 2'; 102, 102') der Dichtung (3; 103) mindestens eine runde Innenlippe (6; 106) umfasst.

9. Vorrichtung (1; 101) gemäß einem der vorherigen Ansprüche, **dadurch gekennzeichnet, dass** das Durchführungsloch (2 oder 2'; 102, 102') verengte Enden hat.

10. Vorrichtung (1; 101) gemäß Anspruch 9, **dadurch gekennzeichnet, dass** sie mindestens eine Klemmschelle umfasst, die an einem der Enden des Durchführungslochs (2 oder 2'; 102, 102') arretiert.

11. Vorrichtung (1; 101) gemäß Anspruch 9, **dadurch gekennzeichnet, dass** sie mindestens eine Bandumwicklung umfasst, die das Kabel und die Dichtung verbindet.

12. Vorrichtung (1; 101) gemäß einem der vorherigen Ansprüche, **dadurch gekennzeichnet, dass** sie mindestens eine Dichtungslippe (15; 115) umfasst, die mit dem Blech (5; 105) kontaktiert.

13. Vorrichtung (1) gemäß einem der vorherigen Ansprüche, **dadurch gekennzeichnet, dass** eine der Gegenplatte (9) eine seitliche Aussparung (12) umfasst, die den Sitz auf der Durchführung der Kabel ermöglicht.

14. Vorrichtung (1; 101) gemäß einem der vorherigen Ansprüche, **dadurch gekennzeichnet, dass** die Versteifungseinlage (7) oder das Innenteil (109) gegossen, ausgegossen oder mechanisch montiert ist, auf der oder den Befestigungsschrauben (11; 111) und die Dichtung (3; 103) durch Einspritzen des Elastomers oder des thermischen Elastomers auf die Einlage (7; 107) hergestellt wird.
